# EUROPEAN PATENT APPLICATION

(11) **EP 1 369 353 A2**
(43) Date of publication of application: **10.12.2003**
(21) Application number: 03253562.7
(22) Date of filing: 05.06.2003
(51) Int. Cl.: B65D 65/40, B65D 65/20, B65D 5/42, B65D 5/56, B32B 1/00

(54) **Packaging element**

(30) Priority: 05.06.2002 GB 0212883
(71) Applicant: DS Smith (UK) Limited, London SW1P 1RZ (GB)
(72) Inventor: Wellstead, Neal, Monmouth, Gwent NP2 5TW (GB)
(74) Representative: Johnson, Terence Leslie

(57) **Abstract**

There is disclosed an element (1) for use in packaging, comprising a laminate of a sheet of fibreboard (2) and a sheet (3) of fluted plastic material. There is disclosed an element (1) for use in packaging wherein the fibreboard (2) comprises a corrugated fibreboard (2) and wherein the fluted plastic material (3) comprises an extruded material sheet (3). There is disclosed a packaging element (1) with at least a high strength to weight ratio.

## Description

The invention relates to packaging, and particularly to an element for use in packaging.

Packaging has been used over an extended period to package, transport, store and present articles so that they are at least protected from damage for example during transport. Prior packaging such as laminated or heavy-duty corrugated board, heavy duty plastic, and timber are generally heavy, expensive, a low strength to weight ratio and lack of versatility. Prior packaging can thus be expensive to make, and use, and does not provide viable options in one product, for the packaging industry.

It is accordingly an object of the invention to seek to mitigate these disadvantages of prior packaging.

According to the invention there is provided an element for use in packaging, comprising a laminate of a sheet of fibreboard, and a sheet of fluted plastic material.

Using the invention it is possible to provide a packaging element with at least a high strength to weight ratio.

The fibreboard may comprise a corrugated fibreboard and the fluted plastic material may comprise an extruded material sheet. A suitable fluted plastic material is that sold under the Registered Trade Mark "CORREX". The extruded material sheet may comprise one face of the laminate, or alternatively there may be an extruded material sheet on opposing major surfaces of the element. These constructions provide for versatility in construction of an element. The flutes of the extruded material sheet may extend substantially in parallel to the corrugations of the corrugated fibreboard sheet. Again, in an alternative the flutes of the extruded material may extend substantially orthogonally to the corrugations of the corrugated fibreboard sheet. These alternatives again demonstrate the versatility of a packaging element embodying the invention.

The or each extruded material sheet may have one or more properties selected from a group comprising UV protection, flame retardency, VCI, anti-static and corona discharge.

The or each extruded material sheet may have an additive to increase flexibility of the material. This provides for ease of construction and use, the additive being added to a master batch.

Furthermore, the or each extruded material sheet may have an additive to reduce cracking. This enhances the period of usefulness of an element embodying the invention particularly when used in extreme temperature conditions.

In another embodiment, there may be a sheet of corrugated fibreboard combined with sheets of extruded material sheet respectively comprising different properties or specifications.

The or each extruded material sheet may be clear or opaque.

There may be a clear extruded material sheet laminated to a printed surface of the corrugated fibreboard sheet. This can provide an interesting and/or pleasing visual or aesthetic effect.

A pre- or post-printed extruded material sheet may also be laminated with the corrugated fibreboard sheet.

One of the corrugated fibreboard sheet and extruded plastic sheet may extend beyond a lateral extremity of the other. This again provides for versatility, particularly when the extruded plastic sheet may be longer than the corrugated fibreboard sheet. In a modification, the free part of the extruded plastic sheet may extend at right angles to the plane of the corrugated fibreboard sheet.

The corrugated fibreboard sheet may also be adapted by surface configurations to produce mitred corners when the element is folded. This provides for 'V' cut notches cut out of the fibreboard, to provide a notch fold.

The corrugated fibreboard sheet may be adapted by surface configurations to facilitate folding of the element.

Thus the said surface configurations may comprise a slit and a score on horizontal creases or fold lines. This provides for ease of folding or bending about the fold lines.

The corrugations and flutes may be sealed by sealing means which may comprise tape.

There may also be data tag means, for example an electronic tag extending between two walls of the element. This may be a tag such as RFID, a flying null or the like.

An element as hereinbefore defined may be joined with another similar element by joining means, which joining means may comprise butt joint and tape joint applied thereto. Alternatively, the joining means may comprise a stepped, or staggered, joint between the two elements.

The tape may be used to seal the edges of the element, for example, to make it waterproof, fireproof or fibre free in the sense that fibre does not spill from the fibreboard. The two sheets may be laminated manually, for example by applying a double-sided adhesive tape.

The manual lamination may comprise manually applying a PVA adhesive.

The two sheets may also be laminated automatically, for example by automatically applying a double-sided adhesive tape or by applying a PVA adhesive in line on a laminating machine. The double-sided tape may be applied using a standard corrugated production machine, with tape applicators.

The element may comprise a blank converted to a desired configuration, for example, the corrugated fibreboard blank may be pre-converted to a desired configuration prior to lamination with the extruded material sheet. Both sheets may be pre-converted to a desired configuration prior to the two sheets being laminated together.

The tape may be applied manually or automatically, for example manual application may be by a hand-held tape dispenser.

For automatic application an in line taping machine may be used. An element embodying the invention may be formed into a packaging member.

The element may be a packaging member may comprise a sleeve, slotted container, half-slotted container, cap or tray, octagonal sleeve, cap or tray, and wraparound member.

An element for use in packaging is hereinafter described, by way of example, with reference to the accompanying drawings.
Fig. 1 is an end elevational view of one embodiment of an element according to the invention;
Figs. 2A, B and C show schematically end elevational views of three other embodiments of element according to the invention;
Fig. 3 shows a perspective view of a further embodiment of an element according to the invention;
Figs. 4A and 4B show respectively side elevational views of an embodiment similar to Fig. 3;
Fig. 5 shows a perspective view of an element according to the invention being folded;
Fig. 6 show a perspective view of an element according to the invention with sealed edges;
Figs. 7A and 7B show respectively schematically ways of joining one element according to the invention with another similar element; and
Figs. 8A - 8G show respectively different applications of an element embodying the invention.

Referring to the drawings, there is shown an element 1 for use in packaging, comprising a laminate of a sheet of fibreboard 2, in the preferred embodiments corrugated fibreboard, and a sheet 3 of fluted plastic material, in the preferred embodiments an extruded material sheet, of the kind which is sold under the Registered Trade Mark "CORREX".

The sheet 3 is extruded in one piece, and comprises two planar surfaces 4, 5 connected by spaced walls 6 at substantially 90° to the planar surfaces 4, 5, the walls 6 defining channels or flutes 7.

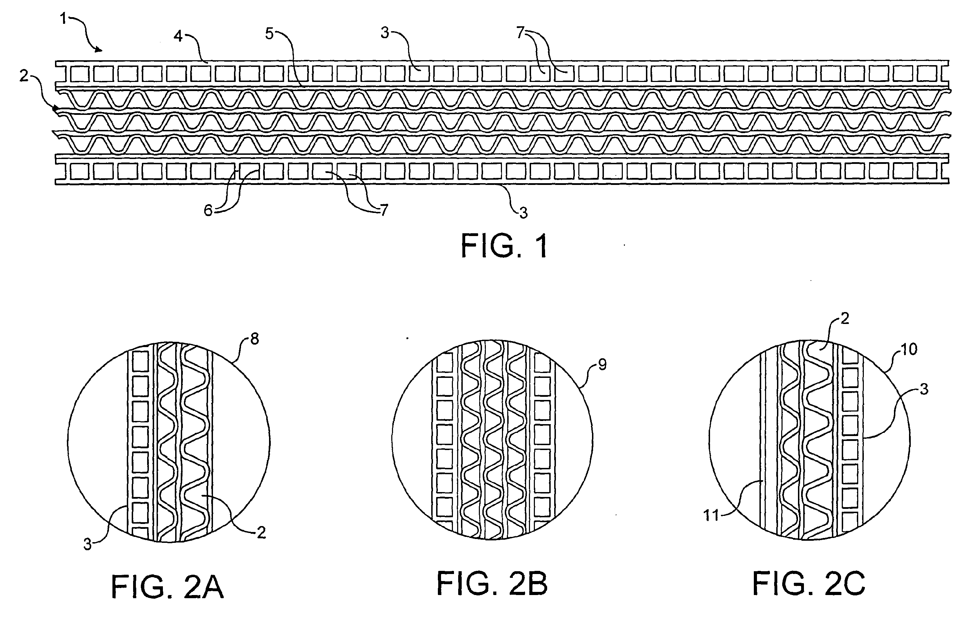

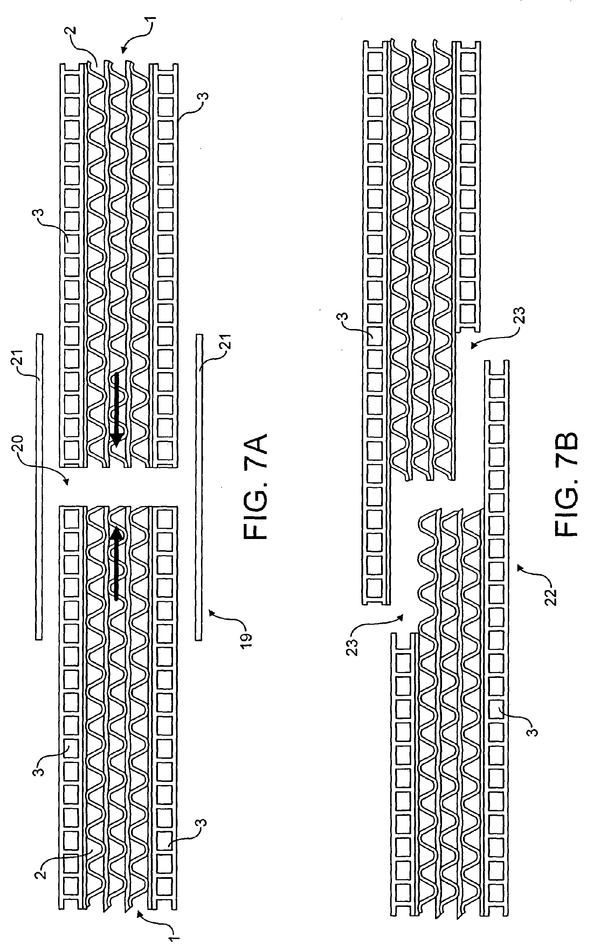

Fig. 1 shows one embodiment of element, having a corrugated fibreboard laminated to, and sandwiched between, an upper and lower (as viewed) extruded material sheet 3, the flutes 7 running in the same direction as, or substantially parallel to the corrugations in the fibreboard 2.

Figs. 2A - 2C show further embodiments 8, 9, 10, Fig. 2A showing a laminate of one double-ply sheet 2 of fibreboard and one sheet of extruded plastic material 3.

The element 9 of Fig. 2B is similar to Fig. 1, the fibreboard being triple-ply while Fig. 2C shows the reverse of Fig. 2A in that the extruded plastic material is on the right (as viewed). There is a facing sheet or lining 11 of Kraft paper on the left hand (as viewed) of the corrugated fibreboard 2.

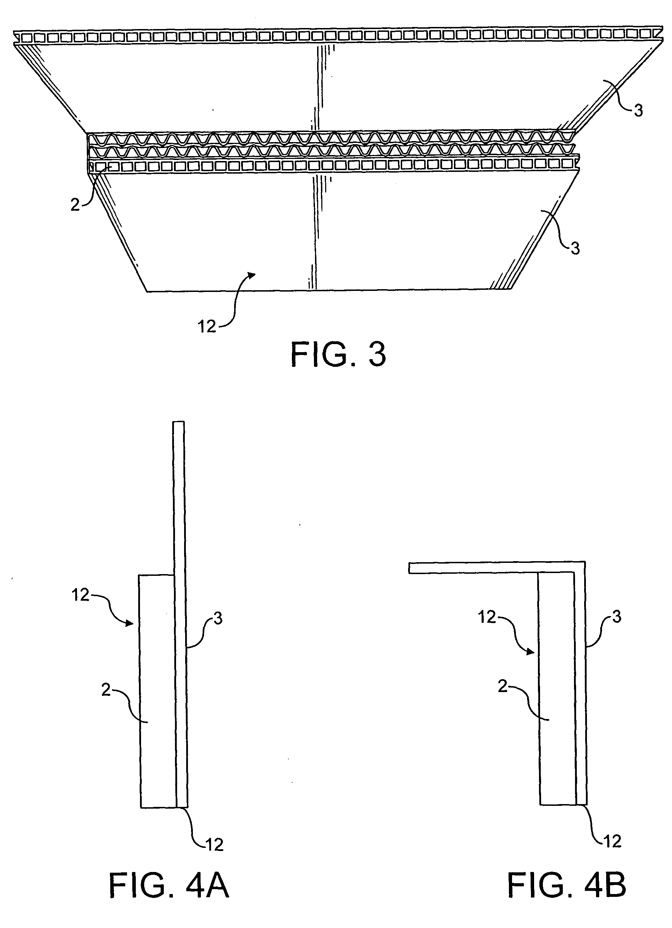

In Fig. 3, the extruded plastic sheet 3 is of the same width as the corrugated fibreboard and extends from the same base point 12 (Figs. 4A, 4B). However, the extruded plastic sheet 3 on one surface is longer than the fibreboard 2, as shown in Figs. 3 and 4A, and also can be folded over as shown at 90° to the plane of the element in Fig. 4B to provide for lamination with variable layer corrugated board (VLC). Thus extruded plastic sheet of an element of Figs. 3 - 4B can be laminated with a standard VLC package such as a VLC case or container. There could be two sheets 3 of extruded plastic material (Fig. 3) or only one sheet 3 (Figs. 4A, 4B). In use the surface 12 is an inner wall of the VLC case.

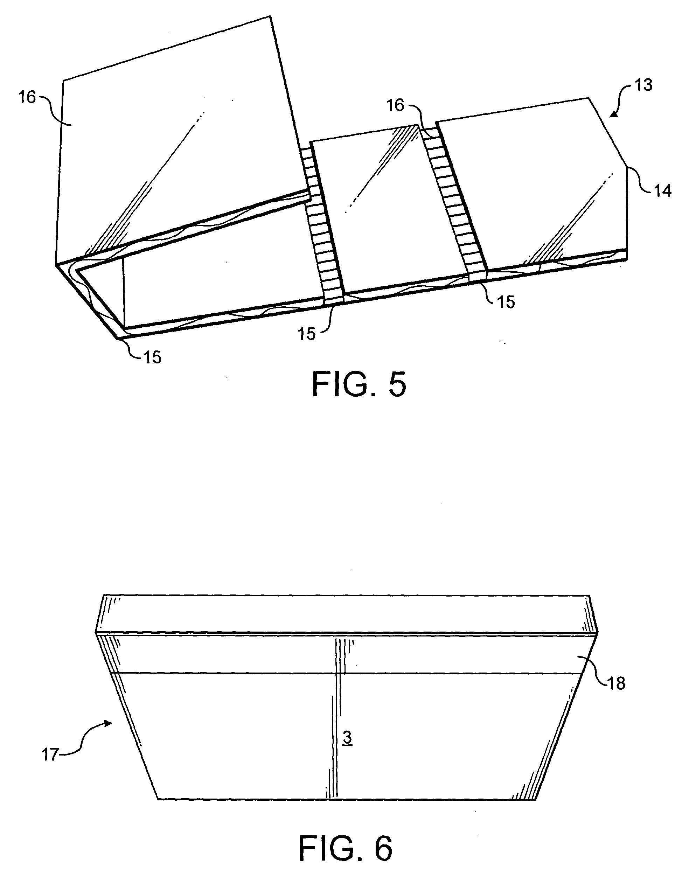

Fig. 5 shows an element 13 which can be notch folded to provide mitred corners of a package or case by way of V-cut notches 14 to create the mitred corners, while fold lines 15 can be slit or scored on horizontal creases to provide for relatively easy bending or folding about fold lines 16.

Again, the extruder plastic material can be on one or both surfaces of the corrugated fibreboard.

Referring now to Fig. 6, there is shown an element 17, sealing means 18 in the form of a tape, which is applied to seal the corrugations and flutes, to prevent ingress of foreign matter such as food, or to render the element proof against water, fire, and to ensure that no fibres are released from the fibreboard, in other words to obviate spoiling of the fibreboard, so reducing atmospheric contamination.

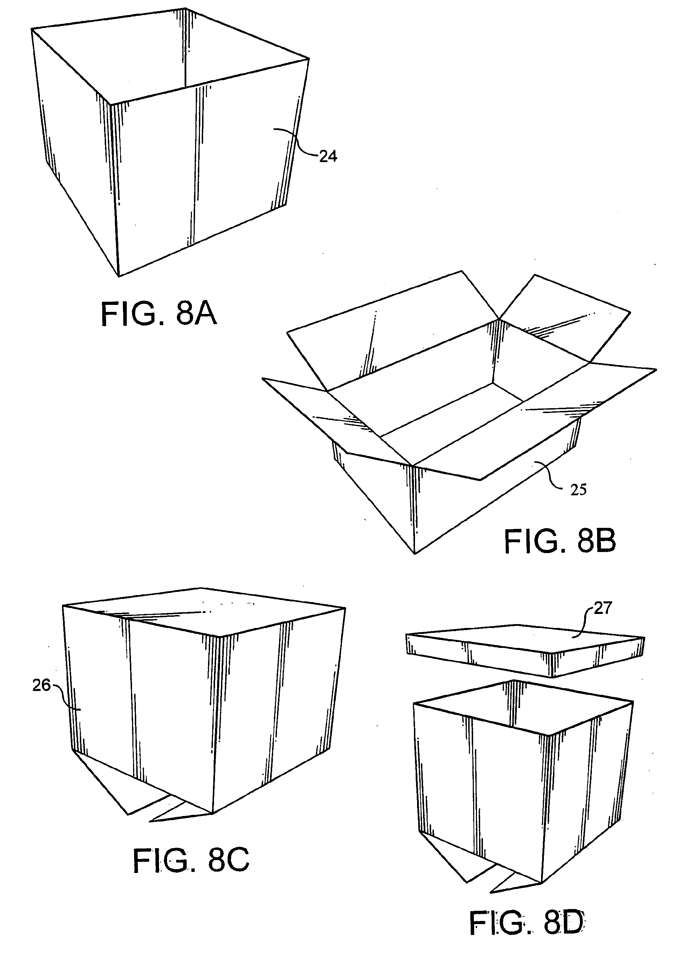

Figs. 7A and 7B show ways of joining one element with a similar one. Fig. 7A shows a butt joint 19 the joint 20 being covered by tape 21 which is an adhesive tape which can be applied manually or automatically. Fig. 7B shows an offset or staggered joint 22, where one surface is stepped at 23 and the other has a longer sheet of extruded plastic material 3. The depth of the step 23 is equivalent to the thickness of the extruded plastic material 3 so when joined by the joint 22, there is a smooth joint. The joint may be completed with tape, manually or automatically applied, or by adhesive, again manually or automatically applied by any suitable means such as an adhesive dispenser.

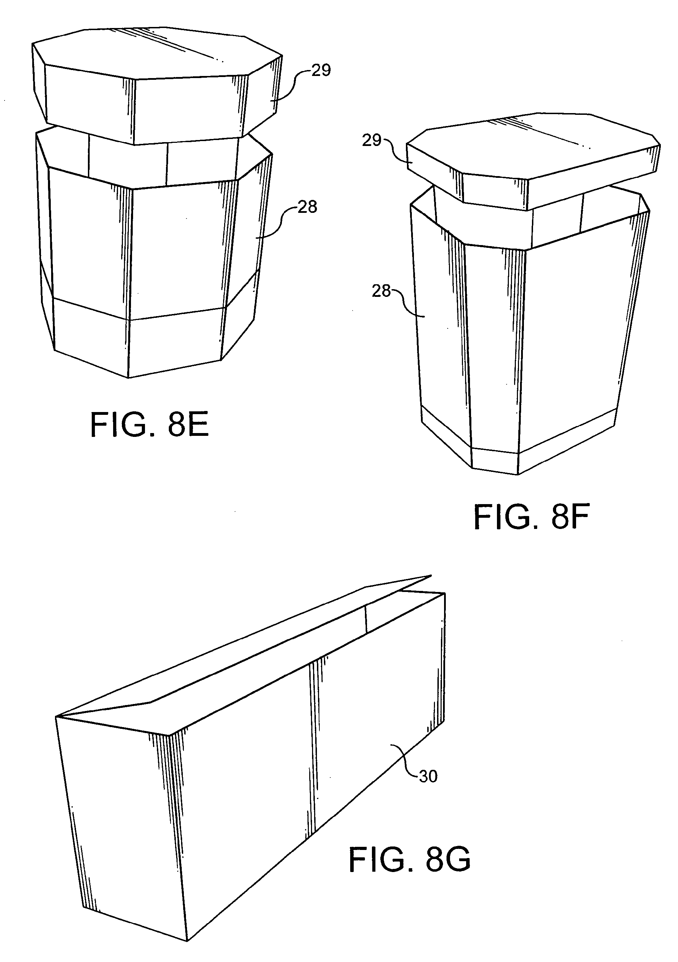

An element embodying the invention may be formed into most forms of desired case or container, for example a sleeve 24 (Fig. 8A), a slotted container 25 (Fig. 8B), a half slotted container 26 with flaps at the top or bottom (Fig. 8C), a cap or tray 27 (Fig. 8D), an octagonal sleeve cap and tray 29 (the sleeve could be regular or irregular) (Figs. 8E, 8F) or wraparound containers or cases of which one embodiment 30 is shown in Fig. 8G, which shows one version, the panels being variable in number, configuration and size.

All the embodiments of element shown herein with reference to the drawings have the following attributes which provide advantages over traditional packaging materials:-
- High strength to weight ratio
- Ability to flat pack (versus timber)
- Outstanding constructional performance
- Great design flexibility
- Great aesthetics
- Fibre free (when edges are sealed)
- Non abrasive
- Water proof (when edges are sealed)
- Oil resistant
- Safe for use with foodstuffs (hygienic)
- Various colours and printing options
- Converted on standard manufacturing equipment
- Manufactured from recyclable materials

## Claims

1. An element for use in packaging, comprising a laminate of a sheet of fibreboard, and a sheet of fluted plastic material.

2. An element according to Claim 1, the fibreboard comprising a corrugated fibreboard and the fluted plastic material comprising an extruded material sheet.

3. An element according to Claim 2, the extruded material sheet comprising one face of the laminate.

4. An element according to Claim 2, there being an extruded material sheet on opposing major surfaces of the element.

5. An element according to Claim 3 or Claim 4, the flutes of the extruded material sheet extending substantially in parallel to the corrugations of the corrugated fibreboard sheet.

6. An element according to Claim 3 or Claim 4, the flutes of the extruded material extending substantially orthogonally to the corrugations of the corrugated fibreboard sheet.

7. An element according to any of Claims 2 to 6, the or each extruded material sheet having one or more properties selected from a group comprising UV protection, flame retardancy, VCI, anti-static and corona discharge.

8. An element according to any of Claims 2 to 7, the or each extruded material sheet having an additive to increase flexibility of the material.

9. An element according to any of Claims 2 to 8, the or each extruded material sheet having an additive to reduce cracking.

10. An element according to any of Claims 2 to 9, comprising a sheet of corrugated fibreboard combined with sheets of extruded material sheet respectively comprising different properties or specifications.

11. An element according to any of Claims 2 to 10, the or each extruded material sheet being clear or opaque.

12. An element according to Claim 11, a clear extruded material sheet being laminated to a printed surface of the corrugated fibreboard sheet.

13. An element according to Claim 11, a pre-or post-printed extruded material sheet being laminated with the corrugated fibreboard sheet.

14. An element according to any of Claims 2 to 13, one of the corrugated fibreboard sheet and extruded plastic sheet extending beyond a lateral extremity of the other.

15. An element according to Claim 14, the extruded plastic sheet being longer than the corrugated fibreboard sheet.

16. An element according to Claim 15, the free part of the extruded plastic sheet extending at right angles to the plane of the corrugated fibreboard sheet.

17. An element according to any of Claims 2 to 16, the corrugated fibreboard sheet being adapted by surface configurations to produce mitred corners when the element is folded.

18. An element according to Claim 17, the surface configurations comprising V-cut notches in the corrugated fibreboard sheet.

19. An element according to any of Claims 2 to 16, the corrugated fibreboard sheet being adapted by surface configurations to facilitate folding of the element.

20. An element according to Claim 19, the said surface configurations comprising a slit and a score on horizontal creases or fold lines.

21. An element according to any of Claims 2 to 20, the corrugations and flutes being sealed by sealing means.

22. An element according to Claim 21, the sealing means comprising tape.

23. An element according to any of Claims 2 to 22, comprising data tag means.

24. An element according to Claim 23, the data tag means comprising an electronic tag extending between two walls of the element.

25. An element according to any of Claims 2 to 24, joined with another similar element by joining means.

26. An element according to Claim 25, the joining means comprising a butt joint and tape joint applied thereto.

27. An element according to Claim, 25, the joining means comprising a stepped, or staggered, joint between the two elements.

28. An element according to any preceding claim, the two sheets being laminated manually.

29. An element according to Claim 26, the manual lamination comprising applying a double-sided adhesive tape.

30. An element according to Claim 26, the manual lamination comprising manually applying a PVA adhesive.

31. An element according to any of Claims 1 to 27, the two sheets being laminated automatically.

32. An element according to Claim 31, the automatic lamination comprising automatically applying a double-sided adhesive tape.

33. An element according to Claim 31, the automatic lamination comprising applying a PVA adhesive in line on a laminating machine.

34. An element according to any preceding claim, comprising a blank which is converted to a desired configuration.

35. An element according to any of Claims 2 to 33, the corrugated fibreboard blank being pre-converted to a desired configuration prior to lamination with the extruded material sheet.

36. An element according to any of Claims 2 to 33, both sheets being pre-converted to a desired configuration prior to the two sheets being laminated together.

37. An element according to any one of Claims 22 to 36, the tape being applied manually or automatically.

38. An element according to Claim 37, the manual application being by a hand-held tape dispenser.

39. An element according to Claim 37, the automatic application being by an in line taping machine.

40. An element according to any preceding claim, formed into a packaging member.

41. An element according to Claim 40, the packaging member comprising a sleeve, slotted container, half-slotted container, cap or tray, octagonal sleeve cap or tray, and wrap around member
